Europäisches Patentamt

European Patent Office

Office européen des brevets

(19)

(11) Veröffentlichungsnummer: **0 199 140 B1**

# (12) EUROPÄISCHE PATENTSCHRIFT

(45) Veröffentlichungstag der Patentschrift: **18.12.91**

(51) Int. Cl.⁵: **C01B 25/41, B01D 1/18**

(21) Anmeldenummer: **86104318.0**

(22) Anmeldetag: **27.03.86**

(54) **Hohlkugelförmige Alkalipolyphosphate mit niedrigem Schüttgewicht sowie Verfahren und Anlage zu ihrer Herstellung.**

(30) Priorität: **17.04.85 DE 3513744**

(43) Veröffentlichungstag der Anmeldung:
**29.10.86 Patentblatt 86/44**

(45) Bekanntmachung des Hinweises auf die
Patenterteilung:
**18.12.91 Patentblatt 91/51**

(84) Benannte Vertragsstaaten:
**BE DE FR GB IT NL SE**

(56) Entgegenhaltungen:
**EP-A- 0 060 403      EP-A- 0 071 040**
**DE-A- 1 667 527      DE-A- 2 720 947**
**DE-B- 2 011 445      US-A- 2 986 449**
**US-A- 3 378 341      US-A- 4 501 639**

(73) Patentinhaber: **HOECHST AKTIENGESELL-
SCHAFT
Postfach 80 03 20
W-6230 Frankfurt am Main 80(DE)**

(72) Erfinder: **Kowalski, Werner
Am Ginsterberg 7
W-5354 Weilerswist(DE)**
Erfinder: **Haas, Hans, Dr.
Bünnagelring 17
W-5357 Swisttal(DE)**
Erfinder: **Dahmen, Theo
Von-Westerburg-Strasse 24
W-5040 Brühl(DE)**
Erfinder: **Erpenbach, Markus
Oberbuschweg 22
W-5000 Köln(DE)**

**Beschreibung**

Die vorliegende Erfindung betrifft ein Verfahren zur Herstellung von hohlkugelförmigen Alkalipolyphosphaten mit niedrigem Schüttgewicht durch Versprühen von wäßrigen Alkaliorthophosphatlösungen mittels Einstoffdüsen bei Vordrucken der Alkaliphosphatlösungen von 6 bis 40 bar in einem Sprühturm durch eine Flammenzone.

Aus der US-A-4 501 639 ist ein Verfahren zur Herstellung von Alkalipolyphosphaten aus Alkaliphosphatlösungen oder -suspensionen durch Versprühen der Ausgangsprodukte in einem Sprühturm durch eine Flammenzone bekannt, wobei das Versprühen mittels mehrerer Einstoffdüsen bei Vordrucken der Alkaliphosphatlösungen oder -suspensionen von 6 bis 66 bar erfolgt. Dabei werden Alkalipolyphosphate mit Schüttgewichten zwischen 620 und 720 g/l erhalten.

Zur Herstellung von Alkalipolyphosphaten mit niedrigem Schüttgewicht versprüht man Alkaliphosphatlösungen zusammen mit Blähmitteln, d.h. mit Substanzen, welche unter den Sprühbedingungen eine Gasphase freisetzen und damit die Bildung von Hohlkugeln begünstigen. Als derartige Substanzen sind beispielsweise Alkalisalze von Phosphorsäuren mit einer elektropositiven Wertigkeit des Phosphors von weniger als 5 (vergl. US-A-2 986 449), Lösungen von Alkalicarbonaten oder -bicarbonaten (vergl. US-A-3 378 341) und Harnstoff beschrieben. Dabei werden Alkalipolyphosphate mit einem Schüttgewicht von 400 bis 450 g/l erhalten.

Aus der DE-B-20 11 445 ist ein Verfahren zur Herstellung von Natriumtripolyphosphat in Hohlkugelform mit einem Schüttgewicht von unter 350 g/l in einem Zweistufenverfahren bekannt. Dazu wird eine aus thermischer Phosphorsäure gewonnene Natriumorthophosphatlösung mit einem Na : P-Verhältnis von etwa 5 : 3, welcher ein Blähmittel und eine Calcium- und/oder Magnesiumverbindung, die sich unter den Verfahrensbedingungen nicht zersetzt, zugesetzt sind, im Gegenstrom mit heißen Gasen eingedampft. Der Eindampfungsrückstand wird anschließend in einem Drehrohr calciniert.

Schließlich wird in der DE-A-1 667 527 ein Verfahren zur Herstellung von Alkalipolyphosphaten mit niedrigem Schüttgewicht und schnellem Lösevermögen beschrieben. Danach wird eine wäßrige Lösung von gemahlenem Alkalimetaphosphat mit einer Kettenlänge von 4 an aufwärts und einem $Me_2^IO$ : $P_2O_5$-Verhältnis zwischen (0,85 : 1) bis (1,5 : 1) in einen mit Heizgas beaufschlagten Sprühturm versprüht. Das resultierende Alkalipolyphosphat weist ein Schüttgewicht von etwa 10 g/l auf und seine Lösegeschwindigkeit ist etwa 10 mal größer als die des gemahlenen Ausgangsproduktes.

Qualitätsmerkmale für als Waschmittelkomponente verwendete Alkalitripolyphosphate sind der Gehalt an $Me_5^IP_3O_{10}$ sowie der Anteil an Hoch- bzw. Tieftemperaturform. Daneben spielt aber je nach Verwendungsart der Alkalitripolyphosphate bei der Waschmittelherstellung ihr Schüttgewicht eine bedeutende Rolle, wobei das Schüttgewicht nicht nur ein praktisches Maß für ihre Oberfläche ist, sondern ihm beispielsweise auch eine erhebliche Bedeutung für den Füllungsgrad der Pakete, in denen das Waschpulver zum Verkauf gebracht wird, zukommt.

Es ist daher Aufgabe der vorliegenden Erfindung, ein Verfahren zur Herstellung von Alkalipolyphosphaten durch Versprühen von Alkaliorthophosphatlösungen mittels Einstoffdüsen bei Vordrucken der Alkaliphosphatlösungen von 6 bis 40 bar in einem Sprühturm anzugeben, bei welchem Alkalipolyphosphate mit einem Schüttgewicht von weniger als 320 g/l anfallen. Das wird erfindungsgemäß dadurch erreicht, daß man die Alkaliorthophosphatlösungen gemeinsam mit der wäßrigen Lösung eines Blähmittels versprüht, wobei man ein unter einem höheren Druck als die beiden wäßrigen Lösungen stehendes permanentes Gas in feinperliger Form in eine mit diesen Lösungen gefüllte und mit den Einstoffdüsen strömungsmäßig verbundene Verwirbelungszone preßt.

Das genannte Verfahren kann wahlweise auch noch dadurch ausgestaltet sein, daß

a) als Blähmittel Harnstoff dient;

b) als Blähmittel niederwertige Phosphorverbindungen, vorzugsweise phosphorige Säure und/oder ihre Salze, dienen;

c) als Blähmittel Alkalicarbonate und/oder -bicarbonate dienen;

d) man als permanentes Gas Preßluft verwendet;

e) man als permanentes Gas Kohlendioxid verwendet;

f) man als permanentes Gas Stickstoff verwendet;

g) der Druck des permanenten Gases mindestens 20 % höher als der Vordruck der Alkaliphosphatlösungen ist;

h) man 1,5 bis 40 $Nm^3$, vorzugsweise 2 bis 6 $Nm^3$, permanentes Gas pro $m^3$ Alkaliphosphatlösung anwendet.

Beim Verfahren gemäß der Erfindung wird durch das Einpressen des permanenten Gases in die Verwirbelungszone bewirkt, daß aus den Austrittsöffnungen der Düsen ein schaumartiges Gas/Flüssigkeitsgemisch austritt. Dieses schaumartige Gemisch gelangt unmittelbar in die Flammenzone des Sprühturmes, wobei das Gemisch unter Verdampfen des Wassers in Alkalipolyphosphat mit einem Schüttgewicht von weniger als 320 g/l umgewandelt wird.

Beim erfindungsgemäßen Verfahren läßt sich bei vorgegebenem Durchmesser der Bohrungen in den Einstoffdüsen und vorgegebenem Vordruck der Alkaliphosphatlösungen das Schüttgewicht des Sprühproduktes durch die Menge des permanenten Gases einstellen, wobei eine höhere Gasmenge, je m³ Alkaliphosphatlösung ein leichteres Produkt liefert.

In der beigefügten Zeichnung ist eine Anlage schematisch und teilweise im Schnitt dargestellt, mit welcher das erfindungsgemäße Verfahren durchgeführt werden kann. Dabei zeigen:

Figur 1    eine teilweise Seitenansicht eines Sprühturmes,

Figur 2    eine Ansicht einer Versprüheinrichtung von unten her,

Figur 3    eine Seitenansicht einer Versprüheinrichtung.

Ein zylindrischer Sprühturm 1 ist mit einem konischen Dekkel 2 verschlossen. Der konische Deckel 2 ist zentrisch von einem Lösungszuführungsrohr 5 durchdrungen, an dessen Ende im Inneren des Sprühturmes 1 eine Versprüheinrichtung 6 angeordnet ist, während sich im Lösungszuführungsrohr 5 außerhalb des Sprühturmes 1 mindestens eine Druckerhöhungspumpe 7 befindet. Der Deckel 2 ist weiterhin von mehreren Brennern 11 durchdrungen.

Die Versprüheinrichtung 6 besteht aus einem Lösungseintrittsrohr 8, an welchem ein Konus 9 befestigt ist. Im unteren Teil des Konus 9 ist mittig ein kegelförmiger Verdrängerkörper 10 unter Ausbildung einer Verwirbelungskammer 12 angeordnet. Der Konus 9 ist nach unten hin durch eine Kreisplatte 13 abgeschlossen, in welche im Bereich der Verwirbelungskammer 12 mehrere Zuleitungen, 14 mit an ihren entgegengesetzten Enden angeordneten Einstoffdüsen 15 unter Ausbildung einer Bündeldüse 3 eingesetzt sind. Weiterhin mündet in die Verwirbelungskammer 12 tangential ein Druckgaszuführungsrohr 4 ein.

Beispiel 1 (nach dem Stand der Technik)

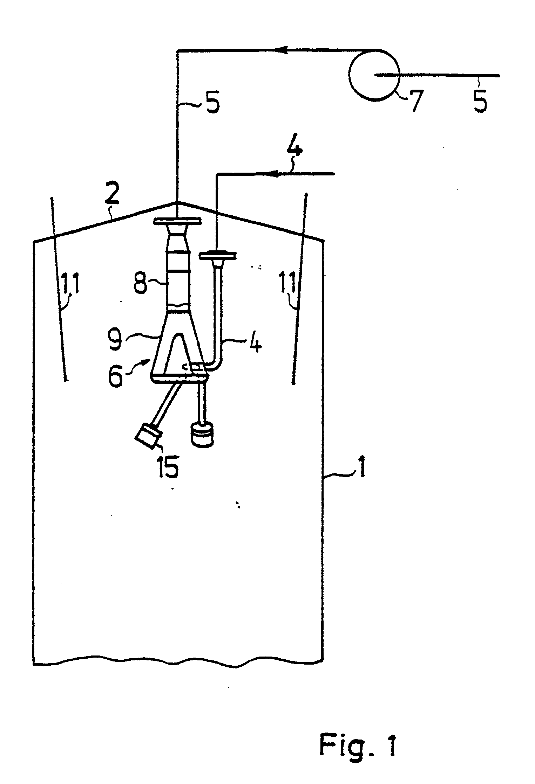

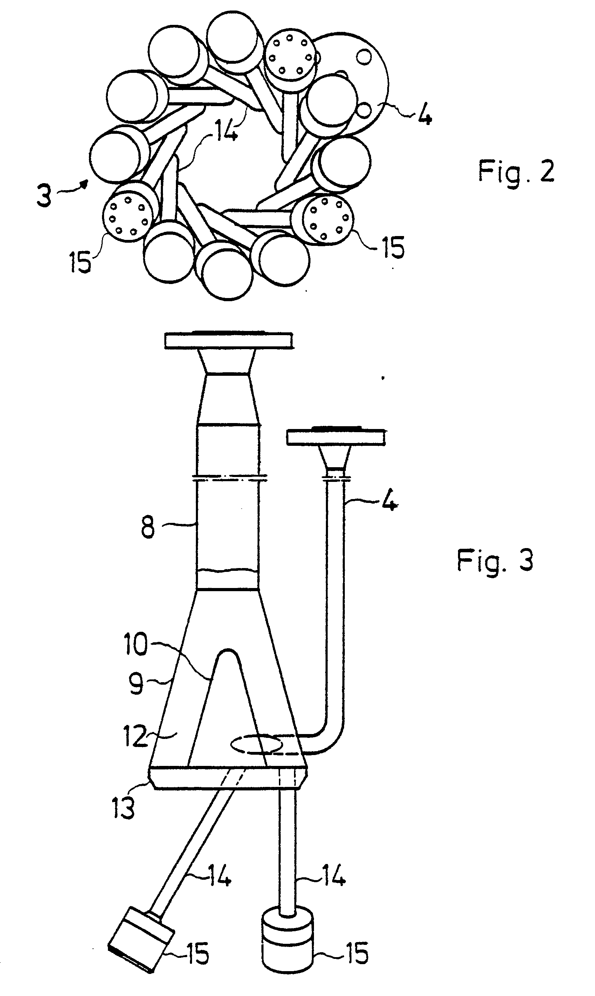

In einem Sprühturm wurden mit Hilfe einer Bündeldüse aus 12 Einstoffdüsen mit je 7 Bohrungen von 1,8 mm Durchmesser (vergl. die Figuren 1 bis 3) bei verschlossenem Druckgaszuführungsrohr stündlich 9 m³ einer Natriumorthophosphatlösung mit einer $P_2O_5$-Konzentration von 30 Gew.-% und einem Na : P-Verhältnis von 1,666 : 1 (5 : 3) mit einem Vordruck von 16 bar versprüht. Die Beheizung des Sprühturmes erfolgte durch Verbrennen von Kohlenmonoxid-Gas.
Es resultierten stündlich 7,5 t Produkt mit einem $Na_5P_3O_{10}$-Gehalt von 98,1 % und einem Schüttgewicht von 650 g/l.

Beispiel 2 (nach dem Stand der Technik)

Beispiel 1 wurde mit der Abänderung wiederholt, daß der Natriumorthophosphatlösung pro m³ 5 kg Harnstoff (entsprechend 1,25 Gew.-% bezogen auf $P_2O_5$) zugesetzt wurde.
Es resultierten stündlich 7,5 t Produkt mit einem $Na_5P_3O_{10}$-Gehalt von 98,0 % und einem Schüttgewicht von 450 g/l.

Beispiel 3 (nach dem Stand der Technik)

Beispiel 1 wurde mit der Abänderung wiederholt, daß der Natriumorthophosphatlösung pro m³ 3 kg phosphorige Säure (entsprechend 0,63 Gew.-%, bezogen auf $P_2O_5$) zugesetzt wurde.
Es resultierten stündlich 7,5 t Produkt mit einem $Na_5P_3O_{10}$-Gehalt von 98,0 % und einem Schüttgewicht von 422 g/l.

Beispiel 4 (gemäß der Erfindung)

In dem im Beispiel 1 beschriebenen Sprühturm wurden mit Hilfe einer Bündeldüse aus 6 Einstoffdüsen mit je 7 Bohrungen von 2,8 mm Durchmesser stündlich 9 m³ der in Beispiel 2 aufgeführten harnstoffhaltigen Natriumorthophosphatlösung mit einem Vordruck von 10 bar versprüht. Durch das einen Durchmesser von 1 mm aufweisende Druckgaszuführungsrohr wurden gleichzeitig stündlich 38 Nm³ Preßluft unter einem Druck von 20 bar in die Verwirbelungskammer der Bündeldüse hineingedrückt. Die Beheizung des Turmes erfolgte wie im Beispiel 1 angegeben.
Es resultierten stündlich 7,5 t Produkt mit hohlkugelförmiger Kornstruktur ("beads"), mit einem $Na_5P_3O_{10}$-Gehalt von 98,0 % und mit einem Schüttgewicht von 225 g/l.

Beispiel 5 (gemäß der Erfindung)

Beispiel 1 wurde mit den Abänderungen wiederholt, daß die phosphorige Säure enthaltende Natriumorthophosphatlösung gemäß Beispiel 3 versprüht wurde und daß gleichzeitig durch das einen Durchmesser von 1 mm aufweisende Druckgaszuführungsrohr stündlich 40 Nm³ Preßluft unter einem Druck von 20 bar in die Verwirbelungskammer der Bündeldüse hineingedrückt wurde. Die Beheizung des Turmes erfolgte wie im Beispiel 1 angegeben.
Es resultierten stündlich 7,5 t Produkt mit hohlkugelförmiger Kornstruktur ("beads"), mit einem $Na_5P_3O_{10}$-Gehalt von 98,1 % und mit einem Schüttgewicht von 211 g/l.

Beispiel 6 (gemäß der Erfindung)

Beispiel 5 wurde mit den Abänderungen wiederholt, daß die phosphorige Säure enthaltende Natriumorthophosphatlösung mit einem Vordruck von 10 bar versprüht wurde und daß anstelle der Preßluft als permanentes Gas 38 Nm³ Stickstoff mit einem Druck von 18 bar in die Verwirbelungskammer der Bündeldüse hineingedrückt wurde, wobei der Stickstoff aus einem mit einer Verdampfungseinrichtung versehenen, flüssigen Stickstoff enthaltenden Druckbehälter entnommen wurde.

Es resultierten stündlich 7,5 t Produkt mit hohlkugelförmiger Kornstruktur, mit einem $Na_5P_3O_{10}$-Gehalt von 97,9 % und mit einem Schüttgewicht von 250 g/l.

Beispiel 7 (gemäß der Erfindung)

Beispiel 6 wurde mit der Änderung wiederholt, daß anstelle des Stickstoffs als permanentes Gas 38 Nm³ Kohlendioxid mit einem Druck von 20 bar in die Verwirbelungskammer der Bündeldüse hineingedrückt wurde, wobei das Kohlendioxid aus einem mit einer Verdampfungseinrichtung versehenen, komprimiertes Kohlendioxid enthaltenden Stahlbehälter entnommen wurde.

Es resultierten stündlich 7,5 t Produkt mit hohlkugelförmiger Kornstruktur, mit einem $Na_5P_3O_{10}$-Gehalt von 98,0 % und mit einem Schüttgewicht von 235 g/l.

Beispiel 8 (gemäß der Erfindung)

Unter Verwendung des Sprühturms mit der Bündeldüse gemäß Beispiel 1 wurden in eine Natriumorthophosphatlösung mit einem Na : P-Verhältnis von 1,576 : 1 (6,5 m³/h) in das Lösungszuführungsrohr unmittelbar am Turm 1300 l/h Natriumhydrogencarbonatlösung (130 g $NaHCO_3$/l) mit einem Druck von 16 bar unter Vermischung eingedrückt und die Mischung mit einem Vordruck von 13 bar in den Turm versprüht. Gleichzeitig wurden durch das einen Durchmesser von 1 mm aufweisende Druckgaszuführungsrohr stündlich 35 Nm³ Preßluft mit einem Druck von 20 bar in die Verwirbelungskammer der Bündeldüse hineingedrückt. Die Beheizung des Turmes erfolgte wie in Beispiel 1 angegeben.

Es resultierten stündlich 5,5 t Produkt mit hohlkugelförmiger Kornstruktur, mit einem $Na_5P_3O_{10}$-Gehalt von 95,8 % und mit einem Schüttgewicht von 210 g/l.

**Patentansprüche**

1. Verfahren zur Herstellung von hohlkugelförmigen Alkalipolyphosphaten mit niedrigem Schüttgewicht durch Versprühen von wäßrigen Alkaliorthophosphatlösungen mittels Einstoffdüsen bei Vordrucken der Alkaliphosphatlösungen von 6 bis 40 bar in einem Sprühturm durch eine Flammenzone, dadurch gekennzeichnet, daß man die Alkaliorthophosphatlösungen gemeinsam mit der wäßrigen Lösung eines Blähmittels versprüht, wobei man ein unter einem höheren Druck als die beiden wäßrigen Lösungen stehendes permanentes Gas in feinperliger Form in eine mit diesen Lösungen gefüllte und mit den Einstoffdüsen strömungsmäßig verbundene Verwirbelungszone preßt.

2. Verfahren nach Anspruch 1, dadurch gekennzeichnet, daß als Blähmittel Harnstoff dient.

3. Verfahren nach Anspruch 1, dadurch gekennzeichnet, daß als Blähmittel niederwertige Phosphorverbindungen dienen.

4. Verfahren nach Anspruch 3, dadurch gekennzeichnet, daß als niederwertige Phosphorverbindungen phosphorige Säure und/oder ihre Salze verwendet sind.

5. Verfahren nach Anspruch 1, dadurch gekennzeichnet, daß als Blähmittel Alkalicarbonate und/oder -bicarbonate dienen.

6. Verfahren nach mindestens einem der Ansprüche 1 bis 5, dadurch gekennzeichnet, daß man als permanentes Gas Preßluft verwendet.

7. Verfahren nach mindestens einem der Ansprüche 1 bis 5, dadurch gekennzeichnet, daß man als permanentes Gas Kohlendioxid verwendet.

8. Verfahren nach mindestens einem der Ansprüche 1 bis 5, dadurch gekennzeichnet, daß man als permanentes Gas Stickstoff verwendet.

9. Verfahren nach mindestens einem der Ansprüche 1 bis 8, dadurch gekennzeichnet, daß der Druck des permanenten Gases mindestens 20 % höher als der Vordruck der Alkaliphosphatlösungen ist.

10. Verfahren nach mindestens einem der Ansprüche 1 bis 9, dadurch gekennzeichnet, daß man 1,5 bis 40 Nm³ permanentes Gas pro m³ Alkaliphosphatlösung anwendet.

11. Verfahren nach Anspruch 10, dadurch gekennzeichnet, daß man 2 bis 6 Nm³ permanentes Gas anwendet.

**Claims**

1. A process for producing hollow-spherical alkali metal polyphosphates of low bulk density by spraying aqueous alkali metal orthophosphate solutions by means of single-component nozzles at upstream pressures of the alkali metal phosphate solutions from 6 to 40 bar in a spray tower through a flame zone, which comprises spraying the alkali metal orthophosphate solutions together with the aqueous solution of an expanding agent, a permanent gas pressurised to a higher pressure than that of the two aqueous solutions being forced in the form of fine bubbles into a turbulence zone which is filled with these solutions and flow-connected to the single-component nozzles.

2. The process as claimed in claim 1, wherein urea is used as the expanding agent.

3. The process as claimed in claim 1, wherein phosphorus compounds of low valency are used as the expanding agent.

4. The process as claimed in claim 3, wherein phosphorous acid and/or salts thereof are used is the phosphorus compounds of low valency.

5. The process as claimed in claim 1, wherein alkali metal carbonates and/or bicarbonates are used as the expanding agent.

6. The process as claimed in at least one of claims 1 to 5, wherein compressed air is used as the permanent gas.

7. The process as claimed in at least one of claims 1 to 5, wherein carbon dioxide is used as the permanent gas.

8. The process as claimed in at least one of claims 1 to 5, wherein nitrogen is used as the permanent gas.

9. The process as claimed in at least one of claims 1 to 8, wherein the pressure of the permanent gas is at least 20 % higher than the upstream pressure of the alkali metal phosphate solutions.

10. The process as claimed in at least one of claims 1 to 9, wherein 1.5 to 40 $m^3$(S.T.P.) of permanent gas are applied per $m^3$ of alkali metal phosphate solution.

11. The process as claimed in claim 10, wherein 2 to 6 $m^3$(S.T.P.) of permanent gas are applied.

**Revendications**

1. Procédé de fabrication de polyphosphates alcalins sous forme de sphères creuses de faible densité apparente par pulvérisation de solutions aqueuses d'orthophosphates alcalins à l'aide de buses à un constituant sous des pressions d'alimentation des solutions de phosphates alcalins de 6 à 40 bar dans une tour de pulvérisation à travers une zone de flammes, caractérisé en ce que l'on pulvérise les solutions d'orthophosphates alcalins en même temps que la solution aqueuse d'un agent gonflant, en introduisant sous pression sous forme de perles fines un gaz permanent, qui se trouve sous une pression supérieure à celle des deux solutions aqueuses, dans une zone de tourbillonnement remplie de ces deux solutions et reliée par écoulement aux buses à un constituant.

2. Procédé selon la revendication 1, caractérisé en ce que l'urée sert d'agent gonflant.

3. Procédé selon la revendication 1, caractérisé en ce que des composés du phosphore à faible valence servent d'agent gonflant.

4. Procédé selon la revendication 3, caractérisé en ce que l'on utilise l'acide phosphoreux et/ou ses sels comme composés du phosphore à faible valence.

5. Procédé selon la revendication 1, caractérisé en ce que des carbonates alcalins et/ou des bicarbonates alcalins servent d'agent gonflant.

6. Procédé selon au moins l'une des revendications 1 à 5, caractérisé en ce que l'on utilise l'air comprimé comme gaz permanent.

7. Procédé selon au moins l'une des revendications 1 à 5, caractérisé en ce que l'on utilise le dioxyde de carbone comme gaz permanent.

8. Procédé selon au moins l'une des revendications 1 à 5, caractérisé en ce que l'on utilise l'azote comme gaz permanent.

9. Procédé selon au moins l'une des revendications 1 à 8, caractérisé en ce que la pression du gaz permanent est supérieure d'au moins 20 % à la pression d'alimentation des solutions de phosphates alcalins.

10. Procédé selon au moins l'une des revendications 1 à 9, caractérisé en ce que l'on utilise 1,5 à 40 $Nm^3$ de gaz permanent par $m^3$ de solution de phosphate alcalin.

11. Procédé selon la revendication 10, caractérisé en ce que l'on utilise 2 à 6 Nm³ de gaz permanent.

Fig. 1

Fig. 2

Fig. 3